# FASCICULE DE BREVET EUROPEEN

(11) **EP 2 381 822 B1**
(45) Date de publication et mention de la délivrance du brevet: **27.03.2013**
(21) Numéro de dépôt: 09804295.5
(22) Date de dépôt: 15.12.2009
(51) Int. Cl.: A47J 31/06, A47J 31/20, A47G 19/16

(54) **ORGANE D'INFUSION**
AUFBRÜHELEMENT
INFUSION MEMBER

(30) Priorité: 17.12.2008 FR 0858739
(43) Date de publication de la demande: 02.11.2011
(73) Titulaire: Seb S.A., 69130 Ecully (FR)
(72) Inventeur: PIRET, Philippe, 78970 Mézières-Sur-Seine (FR); BOUFFAY, Alain, 14200 Hérouville Saint-Clair (FR)
(74) Mandataire: Novagraaf Technologies
(86) Numéro de dépôt international: PCT/FR2009/052530
(87) Numéro de publication internationale: WO 2010/076476

(56) Documents cités:
- WO-A-2008/049163
- DE-A1- 4 432 547
- DE-A1- 10 316 937
- DE-C- 380 523
- DE-U1- 29 612 761
- FR-A- 1 093 414
- GB-A- 578 469
- US-A- 3 354 812

## Description

La présente invention concerne un organe d'infusion qui est adapté à contenir des produits à infuser (tels que des feuilles de thé) sans que ceux-ci ne se dispersent dans l'eau dans laquelle l'organe est plongé.

On connaît divers appareils à préparer des boissons par infusion et comprenant une bouilloire et un organe d'infusion.

On connaît un tel organe d'infusion du type comprenant une cage qui est adaptée à emprisonner le produit à infuser et qui comporte un panier adapté à contenir le produit et possédant une ouverture pour l'introduction et l'extraction de ce dernier, et un couvercle adapté à fermer cette ouverture, la cage étant reliée à une chaîne qui permet sa manipulation.

Toutefois, un tel organe, d'une part, est peu pratique du fait que la chaîne peut facilement tomber dans l'eau d'infusion ou, en tout cas, lorsqu'elle est réalisée en métal, conduit la chaleur, et, d'autre part, ne peut pas être utilisé avec des bouilloires adaptées pour la production automatique d'infusion.

Le document DE 103 16 937 décrit également un organe d'infusion muni d'une cage accrochée à un ensemble tige rotative pour la réception de produits à infuser et d'un couvercle pour obturer l'ouverture que comprend la bouilloire. Cependant, l'agencement d'un cet organe est complexe, et la manipulation et le nettoyage sont difficiles
Dans DE 380 523, l'organe d'infusion comprend une cage adaptée à emprisonner le produit à infuser et un levier s'étendant hors de la bouilloire pour permettre à un utilisateur de déplacer la cage via une barre entre une position d'infusion et de manipulation. Cet organe d'infusion indépendant d'un couvercle amovible favorise les déperditions de calories.
Dans DE 44 32 547, l'organe d'infusion coopère avec un couvercle adapté à fermer une ouverture de la bouilloire. L'organe d'infusion présente une cage pour emprisonner le produit et est fixé à un balancier permettant de déplacer la cage entre une position d'infusion et une position de manipulation. Un tel organe ne permet pas d'éviter les déperditions de calories, et la manipulation n'est pas fiable car le balancier peut se désengager de son point de pivotement facilement.
Dans WO 2008/049163, l'organe d'infusion comporte une cage muni d'un panier amovible équipé d'un organe pouvant coulisser le long d'une barre d'entraînement de la chambre d'infusion. La manipulation d'un tel organe n'est pas aisée et sécurisant car il est nécessaire de saisir le panier directement qui, si en métal, conduit la chaleur.

La présente invention vise à réaliser un organe d'infusion ne présentant pas les inconvénients précités.

Selon l'invention, l'organe d'infusion comprend une barre à une extrémité de laquelle est fixé le panier et le long de laquelle le couvercle est monté mobile.

Ainsi, du fait de la présence de la barre qui est un élément rigide, il est aisé de manipuler la cage sans crainte de se brûler. De plus, toujours du fait de sa rigidité, il est facile d'y associer des organes fonctionnels pouvant coopérer avec des organes fonctionnels complémentaires de la bouilloire, par exemple pour permettre son déplacement automatique.

D'autres particularités et avantages de la présente invention apparaîtront dans un mode de réalisation donné à titre d'exemple non limitatif et illustré par les dessins mis en annexe dans lesquels :

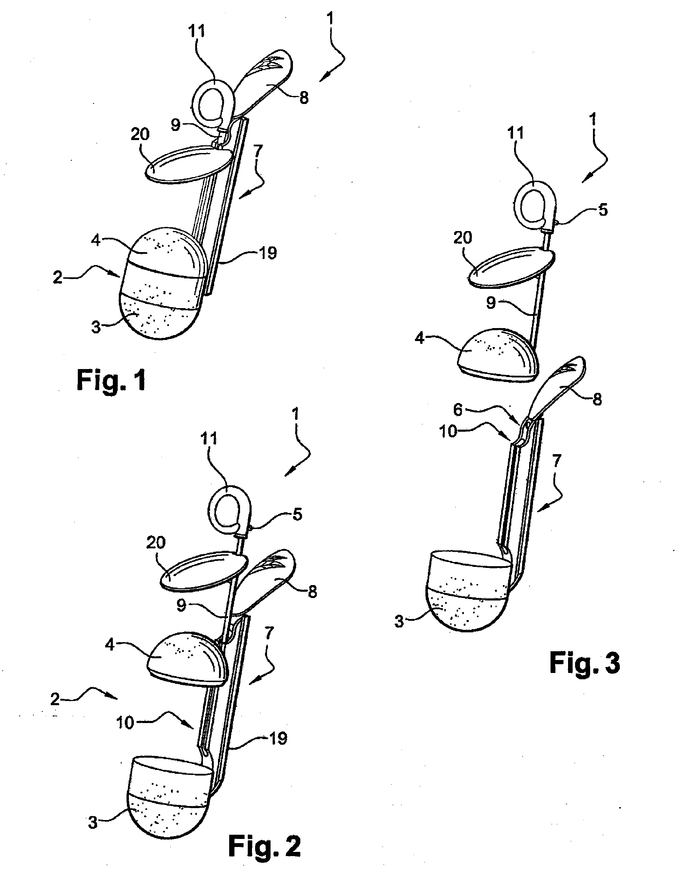

La figure 1 est une vue en perspective de côté de l'organe d'infusion conforme au présent mode de réalisation de l'invention, le couvercle de la cage étant dans sa position fermée,
La figure 2 est une vue similaire à la figure 1, le couvercle étant dans une position ouverte, toujours relié à la barre à laquelle est fixé le panier de la cage,
La figure 3 est une vue similaire aux figures 1 et 2, le couvercle étant dans une position ouverte et séparé de la barre à laquelle est fixé le panier,

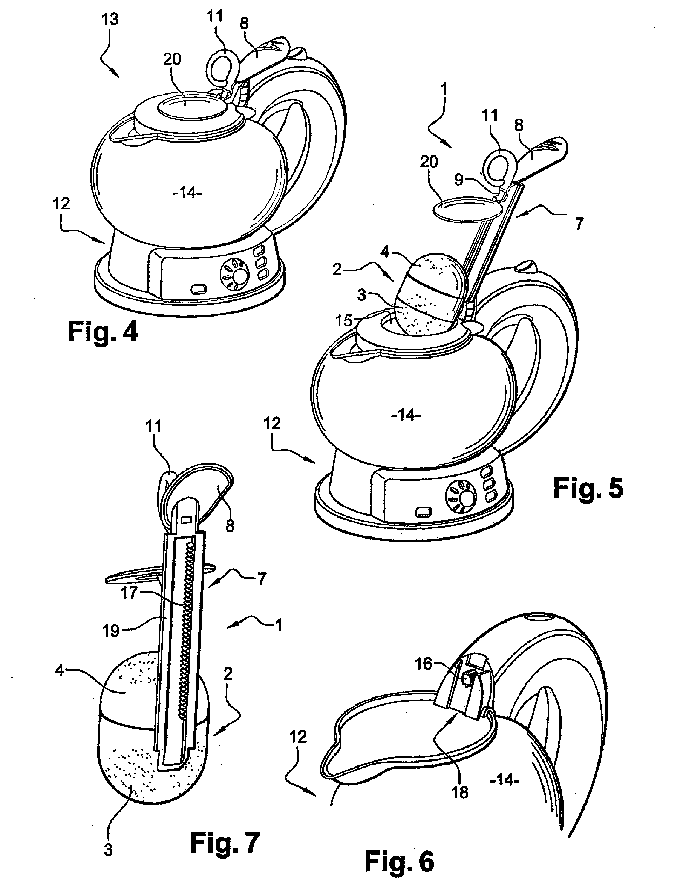

La figure 4 est une vue en perspective d'un appareil à préparer des boissons par infusion comportant l'organe d'infusion illustré aux figures 1 à 3, cet organe étant dans sa position d'infusion,
La figure 5 est une vue similaire à la figure 4, l'organe d'infusion étant en position de manipulation,
La figure 6 est une vue partielle de la bouilloire qui fait partie de l'appareil des figures 4 et 5, illustrant l'organe d'entraînement permettant le déplacement de l'organe d'infusion, et
La figure 7 est une vue en perspective arrière de l'organe d'infusion de la figure 1, illustrant les moyens coopérant avec les organes d'entraînement de la bouilloire.

Un organe d'infusion 1 comprend une cage 2 qui est adaptée à emprisonner un produit à infuser (ici, des feuilles de thé) afin d'éviter sa dispersion dans l'eau dans laquelle la cage 2 est plongée.

La cage 2 comporte un panier 3 qui est adapté à contenir le produit et qui possède une ouverture pour l'introduction et l'extraction de ce dernier. Elle comporte également un couvercle 4 qui est mobile par rapport au panier 3 entre une position ouverte dans laquelle l'ouverture est dégagée et une position fermée dans laquelle elle est obstruée. L'organe d'infusion 1 comporte, par ailleurs, des moyens de verrouillage 5, 6 permettant de verrouiller le couvercle 4 en position fermée (ici, le verrouillage est réalisé par le passage d'un point dur).

L'organe d'infusion 1 comprend une barre 7 à une extrémité de laquelle est fixé le panier 3. Le couvercle 4, quant à lui, est monté mobile le long de cette barre 7.

L'organe d'infusion 1 comprend également un organe de préhension 8 qui est solidaire du panier 3 et qui, dans le présent exemple, est fixé à l'extrémité de la barre 7 opposée à celle où est fixé le panier 3. Cet organe de préhension 8 permet ainsi une manipulation aisée du panier 3 sans craindre de se brûler du fait de la température de l'eau dans laquelle plonge la cage 2.

Dans le présent mode de réalisation, l'organe d'infusion 1 comprend une tige 9 à une extrémité de laquelle est fixé le couvercle 4. Ici, la tige 9 est montée coulissante le long de la barre 7. De façon plus précise, afin de limiter le mouvement de la tige 9 à un mouvement de translation le long de la barre 7, celle-ci comprend une rainure longitudinale 10 qui est adaptée à recevoir la tige 9. En outre, dans le présent mode de réalisation, la tige 9 est séparable de la barre 7 (par translation de la tige 9 sur toute sa longueur).

L'organe d'infusion 1 comprend par ailleurs une poignée 11 qui est solidaire du couvercle 4 et qui, dans le présent exemple, est fixée à l'extrémité de la tige 9 opposée à celle où est fixé le couvercle 4. Cette poignée 11 permet une manipulation aisée du couvercle 4, malgré la présence de la barre 7.

Dans le présent exemple, le verrouillage du couvercle par passage du point dur est réalisé par un ergot 5 porté par la tige 9 (ici, au niveau de la poignée 11) qui vient se loger, par déformation élastique, sous un ergot complémentaire 6 porté par la barre 7 (ci, l'ergot complémentaire 6 est un rebord délimitant l'extrémité supérieure de la rainure longitudinale 10, située sensiblement au niveau de l'organe de préhension 8).

De plus, dans le présent exemple, l'organe d'infusion 1 fait partie, avec une bouilloire 12, d'un appareil 13 permettant de préparer des boissons par infusion. De façon classique, la bouilloire 12 comprend une chambre d'infusion 14 qui est adaptée à contenir de l'eau et à recevoir la cage 2 de l'organe d'infusion 1 par une ouverture supérieure 15. De façon plus précise, la bouilloire 12 comporte un organe d'entraînement 16 (ici, un pignon denté 16) qui est adapté à coopérer avec l'organe d'infusion 1 de façon à permettre son déplacement entre une position d'infusion dans laquelle la cage 2 est disposée dans la chambre d'infusion, et une position de manipulation (dans laquelle elle est accessible de l'extérieur de la bouilloire 12). Dans le présent exemple, la barre 7 comprend une crémaillère 17 qui coopère avec le pignon 16 (situé au niveau de l'ouverture supérieure 15) et qui s'étend le long de la face opposée à celle à laquelle la rainure longitudinale 10 est réalisée. Par ailleurs, dans le présent exemple, en position de manipulation, l'organe d'infusion 1 est séparable de la bouilloire 12.

En outre, dans le présent exemple, la bouilloire 2 comprend des moyens de guidage 18 (une glissière 18 dans laquelle est disposé l'organe d'entraînement 16) qui sont adaptés à coopérer avec des moyens complémentaires de guidage 19 portés par l'organe d'infusion 1 (ici, deux épaulements 19 qui s'étendent de chaque côté de la barre 7, le long de celle-ci, sur la même face que la crémaillère 17). De façon à permettre la stabilisation de l'organe d'infusion 1 en position de manipulation (position dans laquelle il est séparable de la bouilloire 12 du fait du franchissement de la dernière dent de la crémaillère 17), les moyens complémentaires de guidage 19 s'étendent, en direction de la cage 2, au-delà de la crémaillère 17.

Afin de limiter les pertes de chaleur par l'ouverture supérieure 15 quand la cage 2 est dans la chambre d'infusion, l'organe d'infusion 1 comporte un capot 20 qui est adapté à fermer la chambre d'infusion quand l'organe d'infusion 1 est dans sa position d'infusion. Ce capot 20 est disposé au-dessus de la cage 2 et, ici, est porté par la tige 9.

En utilisation, après avoir déplacé le couvercle 4 de façon à rendre suffisamment accessible l'ouverture du panier 3 en utilisant l'organe de préhension 8 et la poignée 11 (voire, après avoir séparé l'ensemble formé par le couvercle 4 et la tige 9 de l'ensemble formé par le panier 3 et la barre 7), l'utilisateur introduit les feuilles de thé dans le panier 3 puis met le couvercle dans sa position de fermeture en faisant coulisser la tige 9 le long de la rainure longitudinale 10 jusqu'à ce que l'ergot 5 s'encliquette avec l'ergot complémentaire 6.

Après avoir introduit de l'eau dans la chambre d'infusion de la bouilloire 12 par son ouverture supérieure 15, l'organe d'infusion 1 (dont la cage 2 contient les feuilles de thé) est mis en position de manipulation, l'extrémité inférieure de la barre 7 au niveau de laquelle est fixée la cage 2 est insérée dans la glissière 18, la dent la plus basse de la crémaillère 17 venant en butée contre l'organe d'entraînement 16 et les épaulements 19 empêchant le pivotement de l'organe d'infusion 1.

Après mise en marche des moyens de chauffe, l'organe d'entraînement 16 entraîne l'organe d'infusion 1 dans sa position d'infusion (ce déplacement, de préférence motorisé, peut être automatique - un capteur de température détectant une température de consigne, éventuellement réglable, commandant la mise en route du moteur - ou non) dans laquelle l'ouverture supérieure 15 de la chambre d'infusion est fermée par le capot 20 porté par l'organe d'infusion 1.

Une fois l'infusion terminée, l'organe d'entraînement 16 entraîne l'organe d'infusion 1 dans sa position de manipulation (ce déplacement peut également être automatique - commandé par une minuterie, éventuellement réglable - ou non) à partir de laquelle il peut être séparé de la bouilloire 12.

A cet instant, l'utilisateur peut ouvrir la cage 2 en faisant coulisser le couvercle 4 le long de la barre 7 pour retirer les feuilles de thé, cette manipulation se faisant sans se brûler grâce à l'organe de préhension 8 et à la poignée 11.

## Revendications

1. Appareil à préparer des boissons par infusion (13), ledit appareil comprenant :
- une bouilloire (12) qui comprend une chambre d'infusion (14) adaptée à contenir de l'eau et accessible par une ouverture supérieure (15) ; et,
- un organe d'infusion (1) coopérant avec ladite bouilloire (12) et comprenant :
- une cage (2) adaptée à emprisonner un produit à infuser ;
- un capot (20) disposé au-dessus de la cage (2) et adapté à fermer ladite ouverture supérieure (15) quand l'organe d'infusion (1) est dans une position d'infusion dans laquelle la cage (2) est disposée dans la chambre d'infusion (14) ;
**caractérisé en ce que** l'organe d'infusion comprend une barre (7) coopérant avec un organe d'entraînement (16) de la bouilloire (12) de façon à permettre le déplacement de l'organe d'infusion (1) entre sa position d'infusion et une position de manipulation dans laquelle la barre (7) et la cage (2) s'étendent à l'extérieur de la bouilloire (12).

2. Appareil (13) selon la revendication 1, **caractérisé en ce que** la cage (2) comporte, d'une part, un panier (3) adapté à contenir le produit à infuser, possédant une ouverture pour l'introduction et l'extraction de ce dernier et disposé à une extrémité de la barre (7), et, d'autre part, un couvercle (4) adapté à fermer cette ouverture et disposé à une extrémité d'une tige (9) qui est monté coulissante le long de la barre (7).

3. Appareil (13) selon la revendication 2, **caractérisé en ce que** le capot (20) est porté par la tige (9).

4. Appareil (13) selon la revendication 3, **caractérisé en ce que** l'organe d'infusion (1) comprend une poignée (11) solidaire du couvercle (4), fixée à la tige (9) au-dessus du capot (20).

5. Appareil (13) selon l'une des revendications 2 à 4, **caractérisé en ce que** l'organe d'infusion (1) comprend un organe de préhension (8) solidaire du panier (3), fixé la barre (7) de sorte que, quand le couvercle (4) ferme le panier (3), l'organe de préhension (8) est disposé au-dessus du capot (20).

6. Appareil (13) selon l'une des revendications 2 à 5, **caractérisé en ce que** la barre (7) comprend une rainure longitudinale (10) adaptée à recevoir la tige (9) et à limiter le mouvement de cette dernière à un mouvement de translation.

7. Appareil (13) selon l'une des revendications 1 à 6, **caractérisé en ce que** la barre (7) comprend une crémaillère (17) formant le moyen adapté à coopérer avec l'organe d'entraînement (16) de la bouilloire (12).

8. Appareil (13) selon la revendication 5 dépendante de la revendication 7, **caractérisé en ce que** la crémaillère (17) et la rainure longitudinale (10) s'étendent le long de deux faces opposées de la barre (7).

9. Appareil (13) selon l'une des revendications 1 à 8, **caractérisé en ce que** l'organe d'infusion comprend des moyens complémentaires de guidage (19) adapté à coopérer avec des moyens de guidage (18) de la bouilloire (12) de façon à guider le mouvement de l'organe d'infusion (1) entre sa position d'infusion et sa position de manipulation.

10. Appareil (13) selon la revendication 9, **caractérisé en ce que** les moyens complémentaires de guidage (19) sont formées par deux épaulements (19) qui s'étendent de chaque côté de la barre (7).

11. Appareil (13) selon la revendication 10 dépendante de l'une ou l'autre des revendications 7 et 8, **caractérisé en ce que** les deux épaulements (19) et la crémaillère (17) sont situés sur la même de la barre (7).

12. Appareil (13) selon l'une des revendications 9 à 11 dépendantes de l'une ou l'autre des revendications 8 et 9, **caractérisé en ce que** les moyens complémentaires de guidage (19) s'étendent, en direction de la cage (2), au-delà de la crémaillère (17).

13. Appareil (13) selon l'une des revendications 1 à 12, **caractérisé en ce que** la bouilloire (12) comprend un pignon (16) adapté à coopérer avec la crémaillère (17).

14. Appareil (13) selon revendication 1, **caractérise en ce que** la bouilloire (12) comprend une glissière (18) adaptée à recevoir les épaulements (19).

15. Appareil (13) selon l'une des revendications 1 à 14 , **caractérisé en ce que** en position de manipulation, l'organe d'infusion (1) est séparable de la bouilloire (12).

## Claims

1. Apparatus (13) for preparing beverages by infusion, said apparatus comprising:
- a boiler (12) that comprises an infusion chamber (14) adapted to contain water and accessible via a top opening (15); and
- an infusion member (1) cooperate with said boiler (12) and comprising:
• a cage (2) adapted to trap a product to be infused;
• a lid (20) disposed over the cage (2) and adapted to close said top opening (15) when the infusion member (1) is in an infusion position in which the cage (2) is disposed in the infusion chamber (14);
**characterized in that** the infusion member comprises a bar (7) cooperating with a driving member (16) of the boiler (12) so as to enable movement of the infusion member (1) between its infusion position and a manipulation position in which the bar (7) and the cage (2) extend out of the boiler (12).

2. Apparatus (13) according to Claim 1, **characterized in that** the cage (2) includes, on the one hand, a basket (3) adapted to contain the product to be infused, having an opening for the introduction and the extraction of the latter and disposed at one end of the bar (7) and, on the other hand, a cover (4) adapted to close this opening and disposed at one end of a rod (9) which is mounted to slide along the bar (7).

3. Apparatus (13) according to Claim 2, **characterized in that** the lid (20) is carried by the rod (9).

4. Apparatus (13) according to Claim 3, **characterized in that** the infusion member (1) comprises a handle (11) fastened to the cover (4), fixed to the rod (9) above the lid (20).

5. Apparatus (13) according to any one of Claims 2 to 4, **characterized in that** the infusion member (1) comprises a holding member (8) fastened to the basket (3), fixed to the bar (7) so that, when the cover (4) closes the basket (3), the holding member (8) is disposed above the lid (20).

6. Apparatus (13) according to any one of Claims 2 to 5, **characterized in that** the bar (7) comprises a longitudinal groove (10) adapted to receive the rod (9) and to limit the movement of the latter to a movement in translation.

7. Apparatus (13) according to any one of Claims 1 to 6, **characterized in that** the bar (7) comprises a rack (17) forming the means adapted to cooperate with the driving member (16) of the boiler (12).

8. Apparatus (13) according to Claim 5 when dependent on Claim 7, **characterized in that** the rack (17) and the longitudinal groove (10) extend along two opposite faces of the bar (7).

9. Apparatus (13) according to any one of Claims 1 to 8, **characterized in that** the infusion member comprises complementary guide means (19) adapted to cooperate with guide means (18) of the boiler (12) so as to guide the movement of the infusion member (1) between its infusion position and its manipulation position.

10. Apparatus (13) according to Claim 9, **characterized in that** the complementary guide means (19) are formed by two shoulders (19) that extend on each side of the bar (7).

11. Apparatus (13) according to Claim 10 when dependent on either one of Claims 7 and 8, **characterized in that** the two shoulders (19) and the rack (17) are situated on the same side of the bar (7).

12. Apparatus (13) according to any one of Claim 9 to 11 when dependent on either one of Claims 8 and 9, **characterized in that** in the direction of the cage (2) the complementary guide means (19) extend beyond the rack (17).

13. Apparatus (13) according to any one of Claims 1 to 12, **characterized in that** the boiler (12) comprises a pinion (16) adapted to cooperate with the rack (17).

14. Apparatus (13) according to Claim 1, **characterized in that** the boiler (12) comprises a slideway (18) adapted to receive the shoulders (19).

15. Apparatus (13) according to any one of Claims 1 to 14, **characterized in that** in the manipulation position the infusion member (1) is separable from the boiler (12).

## Patentansprüche

1. Gerät zum Zubereiten von Getränken durch Aufbrühen (13), wobei das Gerät Folgendes aufweist:
- einen Kochkessel (12), der eine Aufbrühkammer (14) aufweist, die angepasst ist, um Wasser zu enthalten und durch eine obere Öffnung (15) zugänglich ist, und
- ein Aufbrühelement (1), das mit dem Kochkessel (12) zusammenwirkt, und Folgendes aufweist:
- einen Käfig (2), der angepasst ist, um ein aufzubrühendes Produkt einzuschließen,
- ein Deckel (20), die oberhalb des Käfigs (2) angeordnet und angepasst ist, um die obere Öffnung (15) zu schließen, wenn das Aufbrühelement (1) in einer Aufbrühposition ist, in der der Käfig (2) in der Aufbrühkammer (14) angeordnet ist,
**dadurch gekennzeichnet, dass** das Aufbrühelement eine Stange (7) aufweist, die mit einem Antriebsorgan (16) des Kochkessels (12) derart zusammenwirkt, dass das Verlagern des Aufbrühelements (1) zwischen seiner Aufbrühposition und einer Handhabungsposition, in der sich die Stange (7) und der Käfig (2) an der Außenseite des Kochkessels (12) erstrecken, erlaubt wird.

2. Gerät (13) nach Anspruch 1, **dadurch gekennzeichnet, dass** der Käfig (2) einerseits einen Korb (3) aufweist, der angepasst ist, um das aufzubrühende Produkt zu enthalten, der eine Öffnung zum Einführen und Herausnehmen dieses Letzteren besitzt und an einem Ende der Stange (7) angeordnet ist, und, andererseits, eine Haube (4), der angepasst ist, um diese Öffnung zu schließen, und an einem Ende eines Schafts (9), der entlang der Stange (7) gleitend montiert ist, angeordnet ist.

3. Gerät (13) nach Anspruch 2, **dadurch gekennzeichnet, dass** der Deckel (20) von dem Schaft (9) getragen wird.

4. Gerät (13) nach Anspruch 3, **dadurch gekennzeichnet, dass** das Infusionselement (1) einen Griff (11), der fest mit der Haube (4) verbunden ist, der an dem Schaft (9) oberhalb der Haube (20) befestigt ist, aufweist.

5. Gerät (13) nach einem der Ansprüche 2 bis 4, **dadurch gekennzeichnet, dass** das Aufbrühelement (1) ein Greifelement (8), das fest mit dem Korb (3) verbunden ist, der an der Stange (7) befestigt ist, aufweist, so dass, wenn die Haube (4) den Korb (3) schließt, das Greifelement (8) oberhalb der Haube (20) angeordnet ist.

6. Gerät (13) nach einem der Ansprüche 2 bis 5, **dadurch gekennzeichnet, dass** die Stange (7) eine Längsrille (10) aufweist, die angepasst ist, um den Schaft (9) aufzunehmen und die Bewegung dieses Letzteren auf eine Verschiebungsbewegung zu beschränken.

7. Gerät (13) nach einem der Ansprüche 1 bis 6, **dadurch gekennzeichnet, dass** die Stange (7) eine Zahnstange (17) aufweist, die das Mittel bildet, das angepasst ist, um mit dem Antriebsorgan (16) des Kochkessels (12) zusammenzuwirken.

8. Gerät (13) nach Anspruch 5, abhängig von Anspruch 7, **dadurch gekennzeichnet, dass** sich die Zahnstange (17) und die Längsrille (10) entlang von zwei einander gegenüberliegenden Seiten der Stange (7) erstrecken.

9. Gerät (13) nach einem der Ansprüche 1 bis 8, **dadurch gekennzeichnet, dass** das Aufbrühelement komplementäre Führungsmittel (19) aufweist, die angepasst sind, um mit Führungsmitteln (18) des Kochkessels (12) derart zusammenzuwirken, dass die Bewegung des Aufbrühelements (1) zwischen seiner Aufbrühposition und seiner Handhabungsposition geführt wird.

10. Gerät (13) nach Anspruch 9, **dadurch gekennzeichnet, dass** die komplementären Führungsmittel (19) aus zwei Ansätzen (19), die sich zu jeder Seite der Stange (7) erstrecken, ausgebildet sind.

11. Gerät (13) nach Anspruch 10, abhängig von dem einen oder dem anderen der Ansprüche 7 und 8, **dadurch gekennzeichnet, dass** die zwei Ansätze (19) und die Zahnstange (17) auf derselben Stange (7) liegen.

12. Gerät (13) nach einem der Ansprüche 9 bis 11, abhängig von dem einen oder dem anderen der Ansprüche 8 und 9, **dadurch gekennzeichnet, dass** sich die komplementären Führungsmittel (19) in Richtung des Käfigs (2) über die Zahnstange (17) hinaus erstrecken.

13. Gerät (13) nach einem der Ansprüche 1 bis 12, **dadurch gekennzeichnet, dass** der Kochkessel (12) ein Zahnrad (16) aufweist, das angepasst ist, um mit der Zahnstange (17) zusammenzuwirken.

14. Gerät (13) nach Anspruch 1, **dadurch gekennzeichnet, dass** der Kochkessel (12) eine Gleitführung (18) aufweist, die angepasst ist, um die Ansätze (19) aufzunehmen.

15. Gerät (13) nach einem der Ansprüche 1 bis 14, **dadurch gekennzeichnet, dass** das Aufbrühelement (1) in Handhabungsposition von dem Kochkessel (12) getrennt werden kann.
